# EUROPEAN PATENT APPLICATION

(11) **EP 4 745 552 A1**
(43) Date of publication of application: **20.05.2026**
(21) Application number: 24213201.7
(22) Date of filing: 15.11.2024
(51) Int. Cl.: G01N 3/30, G01N 29/04

(54) **IMPROVED APPARATUS AND METHOD FOR NON-DESTRUCTIVE MEASUREMENTS**

(71) Applicant: GrindoSonic BV, 3001 Leuven (BE)
(72) Inventor: VAN DEN BOSSCHE, Alex, 3040 Neerijse (BE)
(74) Representative: Oryon NV

(57) **Abstract**

The present invention concerns an apparatus for non-destructively obtaining a vibrational response of a 3D solid piece to an impact, comprising: - a measurement stage; - a set of one or more robotic arms positioned on or near the measurement stage; - a set of one or more acoustic sensors, each sensor attached to one of the robotic arms and each sensor configured to capture an acoustic response of a 3D solid piece to an impact; - a set of one or more impactors, each impactor attached to one of the robotic arms, - a controller comprising a processor, configured for: * obtaining a set of impact positions and a set of sensor positions; * consecutively for each impact position: ° moving an impactor near the impact position by steering the robotic arm onto which the impactor is attached; ° moving a sensor to the sensor position corresponding to the impact position by steering the robotic arm onto which the sensor is attached; ° signalling the impactor to provide an impact at the impact position on the 3D solid object; ° receiving an acoustic response to the impact, said acoustic response captured by the sensor.

## Description

### Technical field

The present invention pertains to the field of non-destructive material tests on solid pieces, whereby a vibrational response to an impact is obtained and analysed. The present invention is particulary concerned in obtained material properties of solid pieces having intricate shapes.

### Background

Non-destructive tests to obtain material properties such as Young's modulus, shear modulus, Poisson ratio, etc. are known in the art.

International patent application WO2019020825A1 discloses an apparatus for analyzing a mechanical vibratory response of a solid material sample, the apparatus comprising:
- an array of impactors arranged to impart an impact on respective well-defined points on the surface of said solid material sample;
- a sensor configured to capture said mechanical vibratory response as a time-varying signal, subsequent to an impact of said at least one impactor; and
- processing means configured to analyze said time-varying signal to determine the frequencies and decay constants of sinusoids making up said time-varying signal.

This prior art apparatus is capable of obtaining eigenfrequencies and decay constants of solid pieces and to derive material properties therefrom.

International patent application WO2022148827A1 discloses a method for non-destructively detecting deviating additive manufacturing (AM) process behaviour of a 3D printed solid piece, comprising the steps of:
- providing a mechanical impact to the solid piece;
- obtaining a vibrational response of the solid piece to the impact in the frequency domain;
- extracting a set of eigenfrequencies, and a set of attenuations, from the vibrational response, each of said eigenfrequencies corresponding to a vibrational mode of said solid piece, and each of said attenuations corresponding to an eigenfrequency of said set of eigenfrequencies;
- obtaining for at least one vibrational mode:
   ∘ an eigenfrequency shift by comparing one of the set of extracted eigenfrequencies corresponding to said vibrational mode to a reference eigenfrequency value of said vibrational mode and obtaining a porosity value of the solid piece from said eigenfrequency shift, and
   ∘ for said at least one eigenfrequency, computing at least one damping parameter an attenuation corresponding to said eigenfrequency, thereby obtaining a microcrack quantity value of the solid piece, thereby detecting the deviating AM process behaviour.

This prior art method allows obtaining material properties of solid pieces in a simple, cheap and efficient and non-destructive manner.

International patent application WO2020254698A1 discloses a method for acoustically measuring material properties of a test piece at high temperatures, comprising the steps of:
a. heating the test piece to within a testing temperature range;
b. performing a background measurement within said testing temperature range by capturing a vibrational signal from the test piece within a calibration period, thereby obtaining a noise signal;
c. performing an acoustic measurement on said test piece within said testing temperature range and within a testing period by:
   c1. imparting a vibrational excitation onto the test piece;
   c2. capturing a vibrational signal of the test piece within the testing period, thereby obtaining a vibrational response signal to said vibrational excitation, and
d. obtaining the material properties of the test piece by analysing the vibrational response signal, thereby taking into account the noise signal.

This prior art method allows measuring the temperature dependence of material properties.

International patent application WO2023083944A1 discloses an impact device for imparting an impulse impact to a work piece during an impact excitation measurement, the device comprising:
- an elongated elastic bendable arm which is elastically deformable around a bending direction, the bendable arm comprising a proximal longitudinal end and a distal longitudinal end;
- a hammer tip for mechanically providing an impact to the work piece, the hammer tip attached to the distal end of the arm, and
- a programmable actuator attached to the proximal longitudinal end of the arm, whereby the actuator is programmed to provide an angular velocity to the proximal longitudinal end of the arm by rotating said proximal longitudinal end around an actuator axis which is essentially parallel to the bending direction of the arm, the angular velocity following a predefined angular velocity profile, whereby said angular velocity profile is configured to provide an impulse impact to the work piece.

This prior art impact device is functionally very adaptable and provides a controllable manner of providing a controlled impact to a device.

Although the prior art provides many examples of how to obtain material properties from a solid piece by measuring the vibrational response to an impact, i.e. an impact excitation (IE) measurement, the application can in many cases be limited to solid pieces having a relatively normal shape, such as beams, disks, plates, rings, etc. More in particular, the shape regularity of the solid piece tends to relate to the eigenfrequency spectrum in the sense that highly regularly shaped objects typically provide a simpler vibrational response to an impact than highly irregularly shaped objects, i.e. a response with less numerous eigenfrequency peaks. For instance, when looking at the eigenfrequencies of beam-shaped objects, typically one will see a limited number of eigenfrequencies corresponding to longitudinal and lateral stretching modes, torsional modes and their harmonics, whereas more intricately shaped objects will have a response with a lot more, and possibly harder to detect, eigenfrequency peaks.

Exemplary intricately shaped objects can for instance be:
- objects which try to maximize surface area compared to material weight or volume, typically heating or cooling devices, e.g. heat transfer surfaces having multiple extending fins, cooling pipe systems, etc.,
- non-convexly shaped objects, preferably comprising sharp concave edges,
- composite objects which are attached to one another in an essentially 1D region or a region having a cross section which is dimensionally very different from the cross sections of the portions which the object is composed of,
- etc.

When an impact is provided at a certain position on an intricately shaped 3D object, the vibrations induced by the impact may not travel throughout the full object, but may be confined to a subregion of the object. As such,

The present invention aims to provide an apparatus and method which allows to obtain material properties in a non-destructive manner using the vibrational response for intricately shaped solid pieces.

### Summary of the invention

The present invention concerns a non-destructive method for obtaining a vibrational response of a 3D solid piece to an impact, comprising the steps of:
- providing a 3D solid piece to a measurement stage;
- obtaining a set of impact positions and a set of sensor positions, preferaby by:
   ∘ obtaining at least a partial 3D representation of the 3D solid piece; and
   ∘ determining a set of impact positions located on the surface of the 3D solid piece on the basis of the 3D representation and determining a set of sensor positions, each sensor position corresponding to one or more of the impact positions;
- consecutively for each impact position:
   ∘ moving an impactor near the impact position;
   ∘ moving a sensor to the sensor position corresponding to the impact position;
   ∘ imparting an impact with the impactor at the impact position on the 3D solid object;
   ∘ capturing an acoustic response to the impact with the sensor.

Preferably the set of impact positions located on the surface of the 3D solid piece are determined by calculation. Hereby, preferably, impact positions are calculated on the basis of the 3D representation of the 3D solid piece by means of an optimisation procedure, preferably whereby a vibrational response to an impact at an impact position is simulated using the 3D representation and the impact position is optimized with respect to a vibrational response target. This target vibrational response may be based on any or any combination of:
- obtaining a measurable excitation of one or more frequencies or frequency ranges, for instance the calculation of the impact positions may be based on those positions which, when impacted upon, are calculated to excite one or more eigenfrequencies of the object,
- obtaining a predefined magnitude in the response or in a frequency subrange of the response, for instance certain impact positions may lead to a larger vibrational response due to the object being able to vibrate more freely at that position

The present invention also concerns an apparatus for non-destructively obtaining a vibrational response of a 3D solid piece to an impact, comprising:
- a measurement stage;
- a set of one or more robotic arms positioned on or near the measurement stage;
- a set of one or more acoustic sensors, each sensor attached to one of the robotic arms and each sensor configured to capture an acoustic response of a 3D solid piece to an impact;
- a set of one or more impactors, each impactor attached to one of the robotic arms
- a controller comprising a processor, configured for:
   ∘ obtaining at least a partial 3D representation of a 3D solid piece;
   ∘ calculating a set of impact positions located on the surface of the 3D solid piece on the basis of the 3D representation and determining a set of sensor positions, each sensor position corresponding to one or more of the impact positions;
   ∘ consecutively for each impact position:
      ▪ moving an impactor near the impact position by steering the robotic arm onto which the impactor is attached;
      ▪ moving a sensor to the sensor position corresponding to the impact position by steering the robotic arm onto which the sensor is attached;
      ▪ signalling the impactor to provide an impact at the impact position on the 3D solid object;
      ▪ receiving an acoustic response to the impact, said acoustic response captured by the sensor.

### Overview of the figures

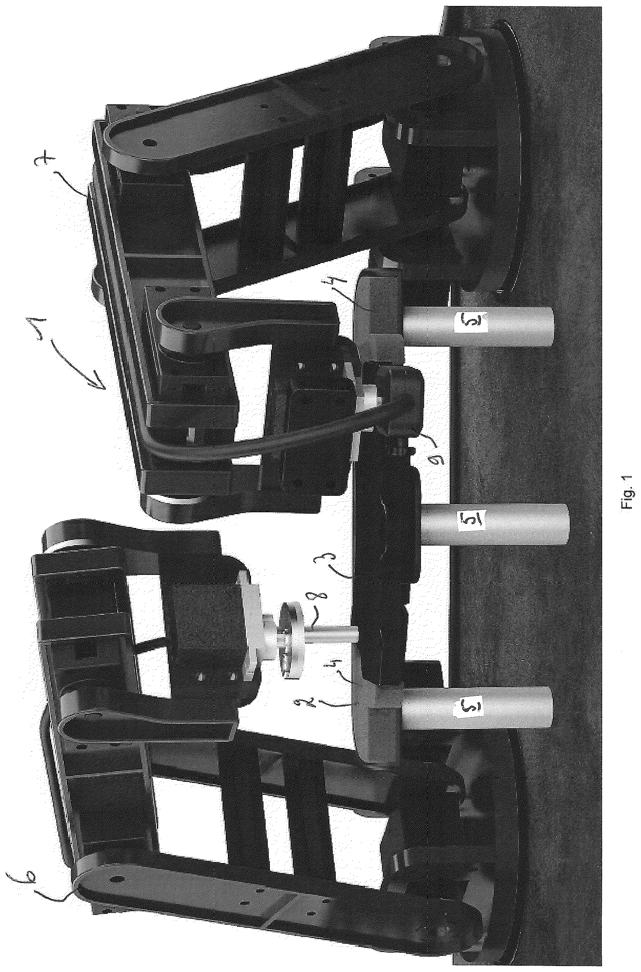

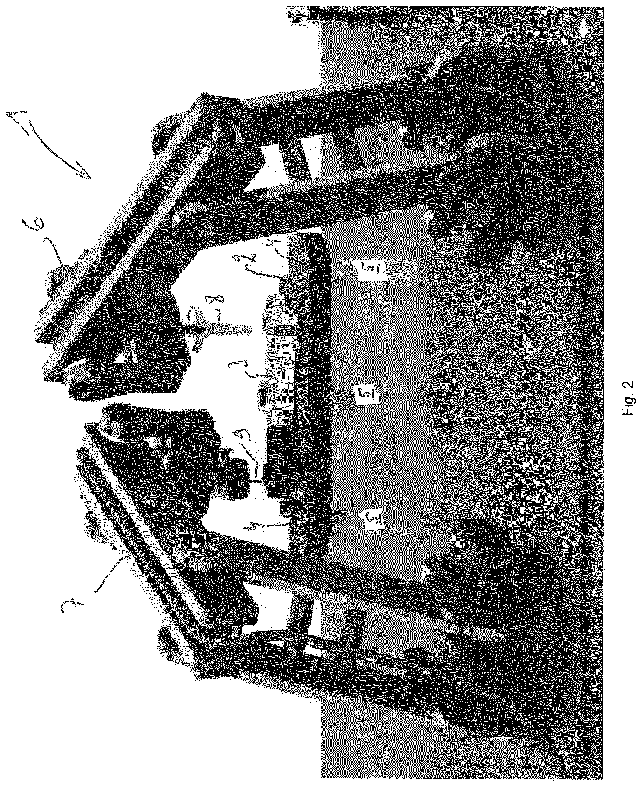

Figure 1 illustrates an embodiment of an apparatus according to the present invention from a front perspective view and figure 2 illustrates the same embodiment from a back perspective view.

### Detailed description of the invention

The invention will now be described in more detail, with reference to the figures. As indicated, the present invention concerns an apparatus (1) for non-destructively obtaining a vibrational response of a 3D solid piece to an impact, comprising a measurement stage (2) which preferably can be selected in view of or adapted to the 3D solid piece (3). In particular if the apparatus is intended to test a large number of identical or near identical 3D solid pieces, the measurement stage may be configured such that the 3D solid piece can vibrate as freely as possible. For this reason, the measurement stage (2) preferably comprises a foam bed (4) and/or a set of supports (5), preferably 3 supports.

The apparatus also comprises a set of one or more robotic arms (6, 7) positioned on or near the measurement stage, a set of one or more acoustic sensors (8), each sensor (8) attached to one of the robotic arms (6) and each sensor (8) configured to capture an acoustic response of a 3D solid piece (3) to an impact and a set of one or more impactors (9) , each impactor (9) attached to one of the robotic arms (7). The one or more robotic arms (7) allow the one or more impactors (9) to be positioned at or near the optimal impact positions, preferably in a subsequent manner. The one ore more robotic arms (6) also allow the one or more acoustics sensors (8) to be positioned at optimal positions to capture the vibrational response.

In an embodiment, the apparatus comprises a first robotic arm (7) onto which a first impactor (9) is attached, and a second robotic arm (6) onto which a first acoustic sensor (8) is attached. Preferably, the first robotic arm is a N-axis robotic arm and/or the second robotic arm is a M-axis robotic arm, whereby N is at least 1, such as 1, 2, 3, 4, 5, 6, 7, 8, 9, 10 or more, and whereby M is at least 1, such as 1, 2, 3, 4, 5, 6, 7, 8, 9, 10 or more. Most preferably the first robotic arm (7) is a six-axis robotic arm and/or the second robot arm is a six-axis robotic arm (6).

A six-axis robotic arm is a type of robotic arm which is able to move in the x, y, and z planes. In addition, it can perform roll, pitch, and yaw movements. As such it provides the freedom to position the impactor at any desired position, in particular at or near the determined impact position, as well as orientate the impactor to any desired angle, and/or to position and orientate the acoustic sensor at any desired position and to any desired angle.

In an embodiment, the apparatus comprises a first robotic arm onto which a first impactor and a first acoustic sensor are attached. In some applications, it may be expected that the acoustic sensor's optimal position is nearby the impact position. In such cases, attaching the acoustic sensor to the same robotic arm as the impactor may allow a good measurement of the response while leading to a smaller apparatus cost. In a preferred embodiment, the robotic arm is a six-axis robotic arm which may be configured to position the impactor at or near an impact position and to orientate the acoustic sensor towards the 3D solid object and/or towards the impact position.

In an embodiment, the apparatus comprises a first robotic arm onto which a first impactor is attached, and a second robotic arm onto which a first acoustic sensor is attached, whereby the second robotic arm is mounted onto the first robotic arm. In such embodiment, the first robotic arm may be moved to allow positioning of the impactor at or near a calculated impact position, thereby moving along the second robotic arm with the sensor, and the second robotic arm may then be used to move the sensor with respect to the first robotic arm and/or the impactor attached thereto, to an optimal sensor position in a neighbourhood of the impactor to capture the vibrational response.

In an embodiment, the apparatus comprises a first robotic arm onto which a first impactor is attached, and a second robotic arm onto which a first acoustic sensor is attached, whereby the first robotic arm is mounted onto the second robotic arm. In such embodiment, the second robotic arm may be moved to allow positioning of the sensor to an optimal sensor position, thereby moving along the first robotic arm with the impactor, and the first robotic arm may then be used to move the impactor with respect to the second robotic arm and/or the sensor attached thereto, to position at or near an impact position.

In a preferred embodiment, the acoustic sensor (8) is or comprises a microphone, such as a piezo-electric microphone. Alternatively, or additionally, the acoustic sensor is or comprises a laser displacement sensor.

Preferably, the apparatus further comprises a controller comprising a processor, configured for:
- obtaining a set of impact positions and a set of sensor positions, preferaby by:
   ∘ obtaining at least a partial 3D representation of a 3D solid piece. The 3D representation can be obtained from technical drawings of the 3D object or from a 3D representation of the 3D object made in a 3D-CAD environment. Alternatively, or additionally, the 3D representation can be obtained by scanning the 3D object, e.g. using one or more LIDAR systems or other types of 3D scanning systems; and
   ∘ calculating a set of impact positions located on the surface of the 3D solid piece on the basis of the 3D representation and determining a set of sensor positions, each sensor position corresponding to one or more of the impact positions. The impact positions can be calculated using a commercially available simulation software package, e.g. a finite element analysis simulation software package;
- consecutively for each impact position:
   ∘ moving an impactor near the impact position by steering the robotic arm onto which the impactor is attached;
   ∘ moving a sensor to the sensor position corresponding to the impact position by steering the robotic arm onto which the sensor is attached;
   ∘ signalling the impactor to provide an impact at the impact position on the 3D solid object;
   ∘ receiving an acoustic response to the impact, said acoustic response captured by the sensor.

Note that the set of impact positions and/or the set of sensor positions can, in an embodiment, be provided to the processor as input. This is particularly preferred in the case the apparatus is intended to test a large number of identical or near identical 3D solid pieces. Hereby, the set of impact positions and/or the set of sensor positions can preferably be determined once, e.g. by the processor of the apparatus or by a separate computing system and/or on the basis of previous measurements. Once determined, the same set of impact positions and the same set of sensor positions can be used for all identical or near identical 3D solid pieces.

As such, a number of vibrational responses can be acquired for impacts provided at different impact positions, each of the impact positions being calculated on the basis of the 3D representation of the 3D solid object, which impact positions can thus be strategically calculated to provide a maximal amount of information even in the case of intricately shaped objects. The robotic arms allow to reach impact positions which are otherwise difficult or even impossible to reach in a controllable way.

In an embodiment, the apparatus comprises a localisation module configured to localize a 3D solid piece which is positioned on the measurement stage. The localisation module preferably comprises a set of distance sensors, which set may comprise one or more cameras and/or one or more laser ranging components. The localisation module is configured to localize the 3D solid piece with respect to the robotic arms and preferably also to obtain orientation information of the 3D solid piece with respect to the apparatus, and preferably with orientation information with respect to the one or more robotic arms. For instance, each of the one or more robotic arms may comprise one or more axes defining the orientation of the robotic arm and the orientation information of the 3D solid piece is obtained with respect to these one or more axes of the robotic arms. Preferably, the localisation module comprises a representation of the 3D solid piece, e.g. a CAD model of the solid piece. Hereto, the localisation module may preferably comprise a processor and a memory, the processsor being configured to compute said orientation information, preferably on the basis of input received from the set of distance sensors. The use of a localisation module in the apparatus of the present invention allows deviations in the positioning of the 3D solid piece on the measurement stage. Hereby, the robotic arms are configured to be steered towards positions and/or orientations based on the localisation information of the 3D solid piece.

In an embodiment, the apparatus comprises a first pick-and-place robotic arm which is configured to pick up a 3D solid piece from a predefined initial location near the apparatus and to place the 3D solid piece onto the measurement stage in a predefined measurement position. Preferably said pick-and-place robotic arm is also configured to pick up a 3D solid piece from a predefined measurement position on the measurement stage and place the 3S solid piece to a final location near the apparatus. Alternatively, or additionally, the apparatus comprises a second pick-and-place robotic arm which is configured to pick up a 3D solid piece from a predefined measurement position on the measurement stage and place the 3S solid piece to a final location near the apparatus. The one, two, or optionally more, pick-and-place robotic arms allow to more accurately position the 3D solid piece on the best location on the measurement stage and to remove the 3D solid piece after the measurement to a final location. This allows to make sure that the measurement stage and the apparatus as a whole does not require manual handling during and/or in between measurements on one or more 3D solid pieces, said manual handling possibly leading to accidental and undesired disturbances in the setup of the apparatus.

In an embodiment, the apparatus comprises one or more temperature sensor for measuring the temperature of the 3D solid piece. Preferably, the method of the current invention comprises the step of measuring a temperature of the 3D solid piece, preferably before, during and/or after capturing the acoustic response. Preferably, the method further comprises the step of compensating acoustic measurement results on the basis of a measured temperature of the 3D solid piece.

A temperature sensor may be attached to the first robotic arm, the second robotic arm, the first pick-and-place robotic arm or the second pick-and-place robotic arm in a temperature sensor location where the temperature sensor is capable of measuring the temperature of the 3D solid piece which is to be tested or which is being tested. Alternatively, or additionally, a temperature sensor may be attached to the measurement stage in a temperature sensor location where the temperature sensor is capable of measuring the temperature of the 3D solid piece which is to be tested or which is being tested. The temperature sensor may preferably comprise a contact thermometer and/or a contactless thermometer.

In an embodiment, a temperature sensor comprises a contact thermometer which is configured to contact the 3D solid piece and to measure the temperature of the 3D solid piece before providing the impact on the 3D solid piece and/or after obtaining the acoustic response. This allows free movement of the 3D solid piece during the actual vibrational measurement while still allowing to obtain the temperature of the 3D solid piece. Alternatively, or additionally, a temperature sensor comprises a contactless thermometer, such as an infrared thermometer, which may preferably be mounted on or near the measurement stage and which can be configured to measure the temperature of the 3D solid piece, before, during and/or after imparting the impact and/or capturing the acoustic response.

In an embodiment, the apparatus comprises a weight sensor, preferably in or near the measurement stage, said weight sensor configured to measure the weight of the 3D solid piece. In a prefered embodiment, the method of the present invention comprises the step of compensating acoustic measurement results on the basis of a measured weight of the 3D solid piece.

The present invention allows obtaining eigenfrequencies from the acoustic response, as well as eigenfrequency shifts, attenuations, and other properties of the 3D solid piece, as for instance described in patent application WO 2022/189466 A1.
- Hence, in an embodiment, the processor is further configured for:extracting a set of eigenfrequencies, and optionally attenuations, from the vibrational response, each of said eigenfrequencies corresponding to a vibrational mode of said solid piece, and
- optionally, obtaining for at least one vibrational mode:
   ∘ an eigenfrequency shift by comparing one of the set of extracted eigenfrequencies corresponding to said vibrational mode to a reference eigenfrequency value of said vibrational mode and preferably obtaining a porosity value of the solid piece from said eigenfrequency shift, thereby optionally detecting the deviating AM process behaviour in case the 3D solid piece was manufactured using an Additive Manufacturing (AM) process.

In another embodiment, the apparatus comprises a second processor, configured for:
- obtaining the acoustic response of the 3D solid piece to the impact, preferably in the frequency domain;
- extracting a set of eigenfrequencies, and optionally attenuations, from the vibrational response, each of said eigenfrequencies corresponding to a vibrational mode of said solid piece, and
- optionally, obtaining for at least one vibrational mode:
   ∘ an eigenfrequency shift by comparing one of the set of extracted eigenfrequencies corresponding to said vibrational mode to a reference eigenfrequency value of said vibrational mode and preferably obtaining a porosity value of the solid piece from said eigenfrequency shift, thereby optionally detecting the deviating AM process behaviour in case the 3D solid piece was manufactured using an Additive Manufacturing (AM) process.

In an embodiment of the method of the current invention, the method comprises the steps of:
- extracting a set of eigenfrequencies, and optionally attenuations, from the vibrational response, each of said eigenfrequencies corresponding to a vibrational mode of said solid piece, and
- optionally, obtaining for at least one vibrational mode:
   ∘ an eigenfrequency shift by comparing one of the set of extracted eigenfrequencies corresponding to said vibrational mode to a reference eigenfrequency value of said vibrational mode and preferably obtaining a porosity value of the solid piece from said eigenfrequency shift, thereby optionally detecting the deviating AM process behaviour in case the 3D solid piece was manufactured using an Additive Manufacturing (AM) process.

Preferably in the embodiments described here above, a set of attenuations are also extracted from the acoustic response, each of said attenuations corresponding to an eigenfrequency of said set of eigenfrequencies. These attenuations can be extracted for at least one and preferably each of the eigenfrequencies. Thereby, for at least one eigenfrequency, at least one damping parameter is computed from an attenuation corresponding to said eigenfrequency, thereby obtaining a microcrack quantity value of the solid piece which allows detecting deviating AM process behaviour which is not detected by the eigenfrequency shift alone. Hereby, an attenuation relates to how a certain eigenfrequency echoes after the impact has been provided to the solid piece, and in particular to how long after the impact said eigenfrequency can still be seen in the acoustic response. The attenuation can be extracted from the time domain response of the acoustic response and/or from the frequency domain response of the acoustic response, preferably from the frequency domain response. A damping parameter, also referred to as a damping coefficient, can be computed from the attenuation. Typically, attenuation can be quantified by looking at the eigenfrequency peak in the frequency spectrum of the acoustic response. Preferably, a damping parameter is related to a width of the eigenfrequency peak in the acoustic response, e.g. the width of the eigenfrequency peak at half maximum. Alternatively or additionally, a damping parameter can be related to the shape of the eigenfrequency peak in the acoustic response, e.g. a skew damping parameter and/or a kurtosis parameter.

## Claims

1. An apparatus for non-destructively obtaining a vibrational response of a 3D solid piece to an impact, comprising:
- a measurement stage;
- a set of one or more robotic arms positioned on or near the measurement stage;
- a set of one or more acoustic sensors, each sensor attached to one of the robotic arms and each sensor configured to capture an acoustic response of a 3D solid piece to an impact;
- a set of one or more impactors, each impactor attached to one of the robotic arms
- a controller comprising a processor, configured for:
∘ obtaining a set of impact positions and a set of sensor positions;
∘ consecutively for each impact position:
▪ moving an impactor near the impact position by steering the robotic arm onto which the impactor is attached;
▪ moving a sensor to the sensor position corresponding to the impact position by steering the robotic arm onto which the sensor is attached;
▪ signalling the impactor to provide an impact at the impact position on the 3D solid object;
▪ receiving an acoustic response to the impact, said acoustic response captured by the sensor.

2. An apparatus according to claim 1, which comprises a first robotic arm onto which a first impactor is attached, and a second robotic arm onto which a first acoustic sensor is attached.

3. An apparatus according to claim 2, whereby the second robotic arm is mounted onto the first robotic arm or whereby the first robotic arm is mounted onto the second robotic arm.

4. An apparatus according to any one of claims 1 to 3, wherein one or more of the robotic arms are six-axis robotic arms.

5. An apparatus according to any of the previous claims, which comprises a first robotic arm onto which a first impactor and a first acoustic sensor are attached.

6. An apparatus according to any of the previous claims, comprising an acoustic sensor which is or comprises a microphone and/or an acoustic sensor which is or comprises a laser displacement sensor.

7. An apparatus according to any of the previous claims, whereby the processor is configured to obtain the set of impact positions by:
▪ obtaining at least a partial 3D representation of a 3D solid piece; and
▪ calculating a set of impact positions located on the surface of the 3D solid piece on the basis of the 3D representation and determining a set of sensor positions, each sensor position corresponding to one or more of the impact positions.

8. An apparatus according to any of the previous claims, which comprises a localisation module configured to localize a 3D solid piece which is positioned on the measurement stage, the localisation module being configured to localize the 3D solid piece with respect to the robotic arms and to obtain orientation information of the 3D solid piece with respect to the apparatus, and more preferably with orientation information with respect to the one or more robotic arms.

9. An apparatus according to claim 8, whereby the localisation module comprises a set of distance sensors, preferably the set comprising one or more cameras and/or one or more laser ranging components.

10. An apparatus according to claim 8 or 9, wherein the localisation module comprises a representation of the 3D solid piece, whereby the localisation module comprises a processor and a memory, the processsor being configured to compute said orientation information, preferably on the basis of input received from the set of distance sensors.

11. An apparatus according to any of the previous claims, which comprises a first pick-and-place robotic arm which is configured to pick up a 3D solid piece from a predefined initial location near the apparatus and to place the 3D solid piece onto the measurement stage in a predefined measurement position,
whereby preferably said pick-and-place robotic arm is also configured to pick up a 3D solid piece from a predefined measurement position on the measurement stage and place the 3S solid piece to a final location near the apparatus and/or
whereby preferably the apparatus comprises a second pick-and-place robotic arm which is configured to pick up a 3D solid piece from a predefined measurement position on the measurement stage and place the 3S solid piece to a final location near the apparatus.

12. An apparatus according to any of the previous claims, which comprises one or more temperature sensors for measuring the temperature of the 3D solid piece, optionally whereby a temperature sensor is attached to the first robotic arm, the second robotic arm, the first pick-and-place robotic arm or the second pick-and-place robotic arm in a temperature sensor location where the temperature sensor is capable of measuring the temperature of the 3D solid piece which is to be tested or which is being tested, and/or a temperature sensor is attached to the measurement stage in a temperature sensor location where the temperature sensor is capable of measuring the temperature of the 3D solid piece which is to be tested or which is being tested.

13. A non-destructive method for obtaining a vibrational response of a 3D solid piece to an impact, comprising the steps of:
- providing a 3D solid piece to a measurement stage;
- obtaining a set of impact positions and a set of sensor positions, preferably by:
∘ obtaining at least a partial 3D representation of the 3D solid piece; and
∘ determining a set of impact positions located on the surface of the 3D solid piece on the basis of the 3D representation and determining a set of sensor positions, each sensor position corresponding to one or more of the impact positions;
- consecutively for each impact position:
a. moving an impactor near the impact position;
b. moving a sensor to the sensor position corresponding to the impact position;
c. imparting an impact with the impactor at the impact position on the 3D solid object;
d. capturing an acoustic response to the impact with the sensor.

14. A method according to claim 13, whereby the set of impact positions located on the surface of the 3D solid piece are determined by calculation.

15. A method according to claim 14, whereby the impact positions are calculated on the basis of the 3D representation of the 3D solid piece by means of an optimisation procedure, whereby a vibrational response to an impact at an impact position is simulated using the 3D representation and the impact position is optimized with respect to a vibrational response target.
